(19) Europäisches Patentamt
European Patent Office
Office européen des brevets

(11) **EP 2 753 439 B1**

(12) **EUROPÄISCHE PATENTSCHRIFT**

(45) Veröffentlichungstag und Bekanntmachung des Hinweises auf die Patenterteilung:
**12.08.2015 Patentblatt 2015/33**

(21) Anmeldenummer: **12759035.4**

(22) Anmeldetag: **27.08.2012**

(51) Int Cl.:
*B22D 11/12* (2006.01)          *B22D 11/22* (2006.01)
*G05B 17/02* (2006.01)          *G01K 7/42* (2006.01)

(86) Internationale Anmeldenummer:
**PCT/EP2012/066592**

(87) Internationale Veröffentlichungsnummer:
**WO 2013/034463 (14.03.2013 Gazette 2013/11)**

(54) **GIESSVERFAHREN, INSBESONDERE STRANGGIESSVERFAHREN**

CASTING METHOD, MORE PARTICULARLY CONTINUOUS CASTING METHOD

PROCÉDÉ DE COULÉE, EN PARTICULIER PROCÉDÉ DE COULÉE CONTINUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.09.2011 DE 102011082158**

(43) Veröffentlichungstag der Anmeldung:
**16.07.2014 Patentblatt 2014/29**

(73) Patentinhaber: **SMS group GmbH**
**40237 Düsseldorf (DE)**

(72) Erfinder:
• **SPROCK, August**
**40474 Düsseldorf (DE)**
• **OUDEHINKEN, Heinz-Jürgen**
**40721 Hilden (DE)**
• **HEIMANN, Thomas**
**58644 Iserlohn (DE)**
• **HASSEL, Christoph**
**47269 Duisburg (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
DE-A1-102004 005 919     DE-A1-102005 036 068
DE-B3- 10 251 716

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 753 439 B1

**Beschreibung**

Die Erfindung richtet sich auf ein Gießverfahren zur Herstellung eines aus flüssigem Metall gegossenen Materialblocks oder Materialabschnitts, bei welchem die im Innern des Materialblocks oder Materialabschnitts herrschende Temperaturverteilung mittels eines auf einer dynamischen Temperatur-Regelung (Dynamic Solidification Control) beruhenden Temperaturberechnungsmodells berechnet wird, wobei in einem Berechnungsschritt die Gesamtenthalpie des durch den Materialblock oder Materialabschnitt gebildeten Systems ermittelt sowie als eine Eingangsgröße in dem Temperaturberechnungsmodell verarbeitet wird und eine oder mehrere Ausgangsgröße(n) des Temperaturberechnungsmodells im Regelungs- und/oder Steuerungsprozess des Gießprozesses verwendet wird/werden.

Weiterhin richtet sich die Erfindung auf die Verwendung eines solchen Gießverfahrens.

Bei der Durchführung von Gießverfahren zur Herstellung von aus einem flüssigen Metall, insbesondere einem eisenhaltigen Material, gegossenen Materialblöcken oder Materialabschnitten kann es wichtig sein, die innere Temperaturverteilung und insbesondere den Bereich noch flüssigen Metalls und den Bereich schon erstarrten Metalls erkennen und lokalisieren zu können, insbesondere, um das Gießverfahren derart regeln und steuern zu können, dass ein optimales Erstarrungsprodukt erhalten wird. Insbesondere ist dies bei der Durchführung des Stranggießens von flüssigem Metall wichtig. So ist die Kenntnis der Temperaturverteilung für die ordnungsgemäße Durchführung des Stranggießverfahrens im Rahmen des Betriebes einer Stranggießanlage zum Erhalt eines qualitativ hochwertigen Produktes, wie einer Dünn- oder Dickbramme sowie von Knüppel- oder Langprodukten aus Stahl- und Eisenlegierungen von fundamentaler Bedeutung. Sollten im sich während des Stranggießens als Materialblock oder Materialabschnitt ausbildenden Metallstrang zu hohe Temperaturen eingestellt sein, führt dies während des Stranggießens des Materialstrangs zum Ausbauchen (bulging) des Strangs zwischen den Rollen. Stellen sich während des Stranggießens in dem Metallstrang zu niedrige Temperaturen ein, kann es während des Biegens und Richtens zu Fehlererscheinungen auf der Oberfläche von aus dem Metallstrang hergestellten Brammen kommen, die zu Rissen in der Bramme führen können. Die Temperaturverteilung bei einem Gießprozess, insbesondere Stranggießprozess, wird z. B. durch hohe Gießtemperaturen und hohe Gießgeschwindigkeiten beeinflusst. Werden diese Parameter größer, so nimmt auch die Erstarrungslänge zu, d. h. die Lage der Sumpfspitze im Metallstrang verschiebt sich in Gießrichtung mehr zum Ende des Metallstranges hin. Hierbei wird die maximal an einer Stranggießanlage mögliche Gießgeschwindigkeit durch die Erstarrungslänge begrenzt, da diese kleiner als die Maschinenlänge, d. h. die Stranggießanlagenlänge, sein muss. Sehr geringe Gießgeschwindigkeiten führen demgegenüber zu geringeren Temperaturen des Metallstranges bzw. der Bramme am Ende des eigentlichen Stranggießbereiches. Da hier aber häufig unmittelbar Öfen zur Behandlung der erhaltenen Bramme nachgeschaltet sind, die im Rahmen eines kontinuierlichen Stranggießprozesses von den Brammen durchlaufen werden, zum Beispiel bei sogenannten CSP (Compact Strip Production)-Anlagen, dürfen die Gießgeschwindigkeiten nicht zu gering sein, da anderenfalls die Ofeneinlauftemperaturen zu niedrig sind und bei Unterschreiten der Ofeneinlauftemperatur ggf. gewünschte Gefügeumwandlungen nicht in der gewünschten Qualität durchgeführt werden oder aber entsprechend erhöhte Energie zur Wiederaufheizung der Brammen im Ofenbereich bereitgestellt werden muss.

Die Temperaturverteilung und die Erstarrungslänge des Metallstranges oder einer Bramme sind daher insbesondere für die Steuerung des Gießverfahrens oder Gießprozesses sehr wichtige (Mess-)Größen oder Parameter, die aber nicht unmittelbar an jeder Stelle einer Stranggießanlage bestimmt oder ermittelt werden können. Pyrometer stehen zum Beispiel an einer Stranggießanlage in der Regel lediglich hinter der sogenannten Sekundärkühlzone und vor einer üblicherweise vorhandenen Schere zur Verfügung. Damit können die Temperaturen und damit auch die Temperaturverteilung in einer Bramme oder in dem gegossenen Metallstrang an der Oberfläche gemessen werden. Wichtig für die Steuerung insbesondere eines Stranggießverfahrens ist aber die Kenntnis der Temperaturverteilung in der Sekundärkühlzone. Hier können aufgrund des durch Besprühen der Oberfläche des Metallstranges mit Wasser auftretenden Spritzwassers die Temperaturen mittels eines Pyrometers kaum gemessen werden. Die Temperaturen im Inneren eines Metallstranges oder einer Bramme können ferner mit einem Pyrometer grundsätzlich nicht gemessen werden, so dass eine Temperaturverteilung im Inneren eines Materialblocks oder eines Metallstranges nur mittels eines Temperaturberechnungsmodells ermittelt werden kann. Ebenso ist die Lage der Sumpfspitze innerhalb des beim Stranggießen entstehenden Metallstranges nur mittels eines Temperaturberechnungsmodelles ermittelbar. Aufgrund des flüssigen Kerns in der Strangmitte im Bereich der Sumpfspitze ist die Ermittlung deren Lage mittels eines direkten Messverfahrens nicht möglich.

Ein solches Temperaturberechnungsmodell stellt das sogenannte dynamische Temperatur-Regelungs-Modell oder DSC(Dynamic Solidification Control)-Modell/Programm dar. Mittels dieses Modells lassen sich die Temperaturverteilung, die Schalendicke und die Erstarrungslänge (Lage der Sumpfspitze) abhängig von den Prozessbedingungen in der jeweiligen Stranggießanlage bestimmen. Zusätzlich ist dieses Modell oder Programm für Regelungszwecke in der Sekundärkühlwasserzone einer Stranggießanlage einsetzbar. Als Regelungsgrößen können die Oberflächentemperatur des Metallstranges oder die Erstarrungslänge (Lage der Sumpfspitze) im Metallstrang Verwendung finden. Bei Vorgabe dieser Größen als Setzwerte berechnet das Modell/Programm die zur Erreichung dieser Werte/Parameter in der Sekundärkühlzone benötigten Wassermengen. Die Ergebnisse werden unmittelbar visualisiert und bei jeder neuen zyklischen Berechnung aktualisiert. In diesem Sinne liegt eine online-Berechnung und -Steuerung vor.

Die Strangtemperatur und die Erstarrungslänge werden bei diesem DSC-Modell/Programm auf Basis der Fourier'schen Wärmegleichung berechnet. Eine notwendige Eingangsgröße in diese Wärmegleichung ist die Gesamtenthalpie des Systems. Die Enthalpie ist jedoch nicht messbar und für bestimmte Metallzusammensetzungen, insbesondere Eisen- oder Stahllegierungen, nur ungenau mittels Näherungsgleichungen zu beschreiben.

Zum Beispiel gibt Schwerdtfeger als Herausgeber in seinem Buch "Metallurgie des Stranggießens", Verlag Stahleisen mbH, 1992 empirische Regressionsgleichungen für die Enthalpie von unlegierten Kohlenstoffstählen an, die innerhalb bestimmter, enger Analysegrenzen mit brauchbarer Genauigkeit verwendet werden können. Diese Regressionsgleichungen sind allerdings Näherungsgleichungen und haben keine physikalische Grundlage. Richter in "Die wichtigsten physikalischen Eigenschaften von 52 Eisenwerkstoffen", Verlag Stahleisen Düsseldorf, 1973 gibt für Reineisen eine genaue thermodynamische Beziehung für die Enthalpie der einzelnen Phasen an. Reineisen hat jedoch keine technische Bedeutung. Für Stahlwerkstoffe liegt für die Gesamtenthalpie eines Systems keine exakte thermodynamische Angabe vor.

Dies führt dazu, dass die numerische Lösung der Fourier'schen Wärmegleichung ungenaue, zumindest hinsichtlich ihrer Genauigkeit verbesserungsfähige Temperaturergebnisse und damit eine entsprechend ungenaue bzw. hinsichtlich ihrer Genauigkeit verbesserungsfähige Bestimmung der Lage der Sumpfspitze (Erstarrungslänge) hervorbringt. Der Nachteil dieses Standes der Technik besteht also darin, dass die Lösung der Fourier'schen Wärmegleichung mit numerischen Verfahren durchgeführt wird, die in Abhängigkeit von der Qualität der Eingangsdaten ein Temperaturergebnis, das heißt eine Temperaturverteilung im Metallstrang liefern, so dass das erhaltene Ergebnis bei fehlerhaften oder ungenauen Enthalpie-Eingangsdaten zu Abweichungen zwischen der berechneten Temperaturverteilung oder Temperatur und der jeweils real existierenden, ggf. durch Messungen belegten, Temperaturverteilung führt. Zudem wird bei der Eingabe ungenauer Enthalpiewerte die Lage der Liquidus- und Solidus-Temperaturen nicht zutreffend ermittelt, so dass auch die Erstarrungslänge bzw. die Lage der Sumpfspitze nicht der Realität entsprechend berechnet wird. Hierdurch kann es insbesondere dann, wenn bei einem Stranggießverfahren eine sogenannte soft reduction, also eine Verformung des Metallstranges durch Anstellung von Rollensegmenten, vorgenommen wird, zu unzutreffenden Anstellungen der Rollensegmente kommen, so dass in Folge davon die durch die Softreduktion erwünschte Qualitätsverbesserung des Brammenmaterials nicht erreicht wird.

Ein gattungsgemäßes Verfahren ist aus der DE 102 51 716 B3 bekannt, welche ein Modellierverfahren für ein Metall offenbart, bei welchem im Rahmen der Umwandlungsgleichung die Gibbs'schen freien Enthalpien der Phasen berechnet werden. Die jeweils für einen Phasenanteil berechnete freie Enthalpie wird dann zur Berechnung der Umwandlungsrate der jeweiligen Phase genutzt und es werden die jeweils erwarteten Phasenanteile berechnet, die in die Gesamtenthalpie eingehen.

Die DE 10 2005 036 068 A1 offenbart ein Modellierverfahren für den zeitlichen Verlauf des Zustandes eines Stahlvolumens, das die Lösung von Wärmeleitungsgleichungen und Phasenumwandlungsgleichungen umfasst. In die Phasenumwandlungsgleichungen gehen die Gibbs'schen freien Enthalpien der Phasen ein und findet die Gesamtenthalpie als Summe der freien Gibbs'schen Energien aller vorhandenen Phasen oder Phasenanteile Berücksichtigung bei der Entwicklung der Temperaturverteilung und der Temperaturregelung.

Die Berücksichtigung einer Summenformel der Gesamtenthalpie ist ferner aus der DE 10 2004 005 919 A1 bekannt.

Der Erfindung liegt daher die Aufgabe zugrunde, eine Lösung zu schaffen, die eine verbesserte Berechnung und Vorhersage der Temperaturverteilung in einem aus flüssigem Metall gegossenen Materialabschnitt oder Materialblock während des Erstarrungsvorganges ermöglicht und insbesondere bei einem Stranggießverfahren oder -prozess eine verbesserte Berechnung oder Vorhersage der Erstarrungslänge (Lage der Sumpfspitze) in dem erstarrenden Metallstrang ermöglicht.

Bei einem Gießverfahren der eingangs näher bezeichneten Art wird diese Aufgabe erfindungsgemäß dadurch gelöst, dass die Gesamtenthalpie aus der Summe der freien molaren Enthalpien (Gibbs'schen Energien) aller im Materialblock oder Materialabschnitt aktuell vorhandenen Phasen und/oder Phasenanteile berechnet wird.

Ebenso wird diese Aufgabe gelöst durch die Verwendung eines solchen Gießverfahrens beim Stranggießen von metallischem Werkstoff in einer Stranggießanlage zur Vorhersage und Kontrolle der Temperaturverteilung sowie zur Ermittlung der Lage der Sumpfspitze oder der Erstarrungslänge in einem gegossenen Gießstrang.

Zweckmäßige Ausgestaltungen und vorteilhafte Weiterbildungen sind Gegenstand der jeweils abhängigen Unteransprüche.

Die Erfindung geht von der Erkenntnis aus, dass sich die Temperaturverteilung und damit auch die Lage der Sumpfspitze im erstarrenden Metallstrang oder im erstarrenden Materialblock bei einem Gießverfahren, insbesondere Stranggießverfahren, dadurch verbessern lässt, dass die Gesamtenthalpie aus der Summe der freien molaren Enthalpien (Gibbs'schen Energien) aller im Materialblock oder Materialabschnitt oder Teilstrang aktuell vorhandenen Phasen und/oder Phasenanteile berechnet wird. Hierdurch lässt sich die für die Berechnung weiterer Größen in dem Temperaturberechnungsmodell notwendige Gesamtenthalpie genauer als bei dem aus der Praxis bekannten Temperaturberechnungsmodell berechnen, so dass die Solidus- und LiquidusTemperatur und folglich insgesamt die Berechnung der Temperaturverteilung und die Ermittlung bzw. Berechnung der Erstarrungslänge mit höherer und größerer Genauigkeit erfolgt. Daraus ergibt sich eine besser mit der Realität übereinstimmende Berechnung der Temperaturverteilung in der Sekundärkühlzone einer Stranggießanlage sowie der Position der Lage der Sumpfspitze (Erstarrungslänge). Insbesondere lässt sich damit die Temperaturverteilung im erstarrenden Metallstrang einer Stranggießanlage berechnen, so dass sich mittels des genutzten Temperaturberechnungsmodells eine gewünschte/vorgegebene, werkstoffabhängige, optimale Temperaturkurve im erstarrenden Metallstrang eingestellt und kontrolliert werden kann. Da die Gesamtenthalpie als Eingangsgröße für die Temperaturberechnung für nahezu alle heute weltweit hergestellten Werkstoffe mit Hilfe der Gibbs-Energien (freie molare Energie) bestimmt oder berechnet werden kann, wird die Temperaturberechnung mit größtmöglicher Sicherheit der Eingangsdaten durchgeführt. Ein weiterer Vorteil der Erfindung besteht auch in der nun hinsichtlich der Genauigkeit verbesserten Berechnung der Erstarrungslänge und damit verbesserten Übereinstimmung mit der Realität der Lage der Sumpfspitze im erstarrenden Metallstrang einer Stranggießanlage. Mittels der Gibbs-Energien können die Liquidus- und Solidus-Temperaturen genauer als mit den bisher verwendeten empirischen Formeln berechnet werden. Zusammen mit der Temperaturberechnung wird auf diesem Wege die Erstarrungslänge mit verbesserter Genauigkeit ermittelt. Damit lässt sich beim Betrieb einer Stranggießanlage sicherstellen, dass die Erstarrungslänge immer kleiner als die Anlagenlänge ist. Weiterhin können die durch das Temperaturberechnungsmodell ermittelten Ausgangsgrößen dazu benutzt werden, die hydraulische Anstellung der Anstellsegmente, zum Beispiel zur Durchführung einer sogenannten soft reduction, zu verwenden, wobei aufgrund der nun genauer bekannten Erstarrungslänge die Anstellung von Rollensegmenten genauer und optimaler erfolgen kann, was zu einer Qualitätsverbesserung der hergestellten Brammen führt. Das Dynamic Solidification Control (DSC)-Temperaturberechnungsmodell kommt insbesondere beim Stranggießen und hier beim sogenannten CSP (Compact Strip Production)-Prozess zum Einsatz und ist Teil der Automation. Mit der "dynamischen Erstarrungsregelung" werden die Brammen gezielt heruntergekühlt, um bestimmte metallurgische Eigenschaften der Werkstoffe zu erhalten. Dazu sind in dem Automationsrechner bzw. der Rechner- oder Recheneinrichtung entsprechend den Stahlgüten und den Brammenabmessungen vordefinierte Kühlmodelle hinterlegt, mit denen die Kühleinrichtungen insbesondere der Sekundärkühlzone einer Strang- oder eine CSP-Anlage gesteuert werden. Im Rahmen einer sogenannten soft reduction kommt dabei beim Stranggießen eine hydraulische Segmentanstellung zum Einsatz, welche durch eine dynamic soft reduction-Technologie gesteuert wird. Hierbei üben die Richt- und Treibrollen mittels ihrer Hydraulik in den Segmenten einen gezielten Druck auf die Brammen im Bereich der Endererstarrung aus. Dadurch werden Kernseigerungen im Inneren der Bramme minimiert bzw. Kernporositäten unterdrückt. Auf diese Weise lassen sich hochqualitative Stähle produzieren und die Gießanlage erhält eine hohe Variabilität hinsichtlich des Stahlgütenspektrums. Konkret dargestellt ist der Berechnungsschritt zur Ermittlung der Gesamtenthalpie in Ausgestaltung der Erfindung dadurch, dass im Rahmen des Temperaturberechnungsmodells die Gesamtenthalpie als freie molare Gesamtenthalpie (H) des Systems mittels der Gibbs-Energie (G) bei konstantem Druck (p) nach der Gleichung

$$H = G - T\left(\frac{\partial G}{\partial T}\right)_p$$

ermittelt wird, wobei H = die molare Enthalpie des Systems, G = die Gibbs-Energie des Systems, T = die absolute Temperatur in Kelvin und p = den Druck des Systems bedeuten.

Bestandteil der Ausgestaltung des erfindungsgemäßen Gießverfahrens ist weiterhin, dass im Rahmen des Temperaturberechnungsmodells die Temperaturverteilung mittels der Fourier'schen Wärmegleichung

$$\rho c_p \frac{\partial T}{\partial t} - \frac{\partial}{\partial s}\left(\lambda \frac{\partial T}{\partial s}\right) = Q$$

ermittelt wird, wobei $\rho$ = die Dichte, $c_p$ = die spezifische Wärmekapazität bei konstantem Druck, T = die berechnete absolute Temperatur in Kelvin, $\lambda$ = die Wärmeleitfähigkeit, s = die zugehörige Ortskoordinate, t = die Zeit und Q = die während der Phasenumwandlung flüssig - fest frei werdende Energie des Systems bedeuten.

In dem Temperaturberechnungsmodell wird weiterhin die während der Phasenumwandlung von flüssig nach fest frei werdende Energie mittels der Gleichung

$$Q = \rho L \frac{\partial f_s}{\partial t}$$

ermittelt, wobei Q = die frei werdende Energie während der Phasenumwandlung, $\rho$ = die Dichte, L = die latente Schmelzwärme, t = die Zeit und $f_s$ = den Phasenumwandlungsgrad des Systems bedeuten, was die Erfindung ebenfalls vorsieht.

Ferner ist in Ausgestaltung der Erfindung vorgesehen, dass im Rahmen des Temperaturberechnungsmodells für eine Phasenmischung die Gibbs-Energie (G) des Gesamtsystems als Summe der die Gibbs-Energien der Reinphasen sowie deren Phasenanteilen nach der Gleichung

$$G = f^l G^l + f^\gamma G^\gamma + f^{p\alpha} G^{p\alpha} + f^{e\alpha} G^{e\alpha} + f^{ec} G^{ec}$$

ermittelt wird, wobei G = die Gibbs-Energie des Systems, $f^i$ = der Gibbs-Energieanteil der jeweiligen Phase oder des jeweiligen Phasenanteils am Gesamtsystem und $G^i$ = die Gibbs-Energie der jeweiligen Reinphase oder des jeweiligen Phasenanteils des Systems bedeuten.

Die Gibbs-Energien lassen sich in vorteilhafter Weise gemäß Weiterbildung der Erfindung dadurch ermitteln, dass das im Rahmen des Temperaturberechnungsmodells für ein System mit Anteilen an Austenit-, Ferrit- und Flüssigphase die Gibbs-Energie nach folgender Gleichung

$$G^\Phi = \sum_{i=1}^{n} x_i^\Phi G_i^\Phi + RT \sum_{i=1}^{n} x_i ln(x_i) + {}^E G^\Phi + {}^{magn} G^\Phi$$

ermittelt wird, wobei $G^\Phi$ = die Gibbs-Energie einer jeweiligen Phase $\Phi$, $x_i^\Phi$ = der Molenbruch der i-ten Komponente der jeweiligen Phase $\Phi$, $G_i^\Phi$ = die Gibbs-Energie der i-ten Komponente der jeweiligen Phase $\Phi$, R = die allgemeine Gaskonstante, T = die absolute Temperatur in Kelvin, $^E G^\Phi$ = die Gibbs-Energie für eine nicht ideale Mischung und $^{magn} G^\Phi$ = die magentische Energie des Systems bedeuten.

Weiterhin wird in Ausgestaltung der Erfindung zweckmäßigerweise berücksichtigt, dass im Rahmen des Temperaturberechnungsmodells die Gibbs-Energie für eine nicht ideale Mischung ($^E G^\Phi$) nach der Gleichung

$$^E G^\phi = \sum x_i x_j \, {}^a L_{i,j}^\Phi (x_i - x_j)^a + \sum x_i x_j x_k L_{i,j,k}^\Phi$$

ermittelt wird, wobei $^E G^\Phi$ = die Gibbs-Energie für eine nicht ideale Mischung, $x_i$ = den Molenbruch der i-ten Komponente, $x_j$ = den Molenbruch der j-ten Komponente, $x_k$ = den Molenbruch der k-ten Komponente, a = einen Korrekturterm, $^a L_{i,j}^\Phi$ = Wechselwirkungsparameter verschiedener Ordnung und $^a L_{i,j,k}^\Phi = {}^a L_{i,j}^\Phi$ = Wechselwirkungsparameter verschiedener Ordnung des Gesamtsystems bedeuten.

Ebenso wird in dem Temperaturberechnungsmodell beim Gießverfahren in Ausgestaltung der Erfindung zweckmäßigerweise berücksichtigt, dass im Rahmen des Temperaturberechnungsmodells, der Anteil der magnetischen Energie ($^{magn} G^\Phi$) nach der Gleichung

$$^{magn} G^\phi = RT ln(1 + \beta) f(\tau)$$

ermittelt wird, wobei $^{magn} G^\Phi$ = die magnetische Energie, R = die allgemeine Gaskonstante, T = die absolute Temperatur in Kelvin, $\beta$ = das magnetische Moment und $f(\tau)$ = den Anteil am Gesamtsystem in Abhängigkeit von der normierten Curietemperatur ($\tau$) des Gesamtsystems bedeuten.

Insbesondere ist das erfindungsgemäße Verfahren beim Stranggießen mit Vorteil anzuwenden, so dass die Erfindung sich weiterhin dadurch auszeichnet, dass ein Stranggussstrang gegossen wird, wobei mittels des Temperaturberechnungsmodells als Ausgangsgröße (n) die Lage der Sumpfspitze und/oder die Temperaturverteilung in dem den Stranggussstrang ausbildenden Materialblock oder Materialabschnitt ermittelt wird.

Ebenso sieht die Erfindung daher in Weiterbildung vor, dass es als Bestandteil eines Steuerungs- und/oder Regelungsverfahrens beim Stranggießen von Metall, insbesondere eisenhaltigem Metall, vorzugsweise Stahl, ausgeführt wird.

Mit dem erfindungsgemäßen Verfahren lässt sich in vorteilhafter Weise auch eine sogenannte soft reduction durchführen. Die Erfindung sieht daher weiterhin vor, dass anhand der Lage der Sumpfspitze die Erstarrungslänge eines Stranggussstranges ermittelt und die Erstarrungslänge als eine Eingangsgröße der Steuerung und/oder Regelung der hydraulischen Anstellung der Segmente der Stranggussanlage längs des Stranggussstranges zugeführt wird.

Zudem lässt sich mit der Erfindung auch die Sekundärkühlung einer Stranggießanlage steuern, so dass sich das erfindungsgemäße Verfahren weiterhin dadurch auszeichnet, dass mittels des als metallurgisches Prozessmodell ausgebildeten Temperaturberechnungsmodell die Sekundärkühlung einer Stranggießanlage gesteuert wird.

Da die Gibbs-Energien für nahezu alle heute weltweit hergestellten Werkstoffe bereit stehen, kann der Temperaturverlauf im Materialblock werkstoffabhängig ermittelt werden. Die Erfindung sieht daher weiterhin vor, dass mittels des Temperaturberechnungsmodells der Temperaturverlauf im Materialblock oder Materialabschnitt werkstoffabhängig ermittelt und eingestellt wird.

Da sich mit dem erfindungsgemäßen Verfahren sehr schnell und zeitnah die Temperaturverteilung in einem Materialblock oder -abschnitt, insbesondere dem sich beim Stranggießen ausbildenden erstarrenden Metallstrang berechnen lässt, eignet sich die Verwendung des Verfahrens bzw. der Berechnungsmethode insbesondere dazu, diese Online durchzuführen und zur Steuerung des Stranggießprozesses oder -verfahrens zu benutzen. Die Verwendung zeichnet sich in Ausgestaltung daher weiterhin dadurch aus, dass das Gießverfahren und damit das diesem zugrunde liegende Temperaturberechnungsmodell zur Online-Ermittlung der Temperaturverteilung und der Lage der Sumpfspitze sowie zur Steuerung des Stranggießprozesses verwendet wird.

Von Vorteil ist die Verwendung des Gießverfahrens auch bei der Durchführung eines Soft Reduction-Prozesses beim Stranggießen, was die Erfindung ebenfalls vorsieht. Bei der Durchführung eines Soft Reduction-Prozesses werden die Rollensegmente der Stranggießanlage hydraulisch gegen den sich bildenden Metallstrang angestellt, um Fehlerbildungen im Inneren des Metallstranges beim Erstarren insbesondere im Bereich der Sumpfspitze zu vermeiden.

Schließlich zeichnet sich die Erfindung dadurch aus, dass die Verwendung des Gießverfahrens zur Erhöhung der Prozessstabilität und Produktverbesserung beim Stranggießen erfolgt.

Die Erfindung ist nachstehend näher erläutert, wobei verschiedene Figuren zur Verständniserleichterung beigefügt sind. Von diesen zeigen

Figur 1      eine Darstellung der Gibbs-Energie für Reineisen,
Figur 2      ein (konstruiertes) Phasendiagramm mit Gibbs-Energien,
Figur 3      einen Vergleich berechneter und experimenteller LiquidusTemperaturen nach Schwerdtfeger,
Figur 4      einen Vergleich berechneter und experimenteller LiquidusTemperaturen nach Gibbs,
Figur 5      den Verlauf der Gesamtenthalpie nach Gibbs für einen kohlenstoffarmen Stahl,
Figur 6      den Verlauf der Phasenanteile nach Gibbs für einen kohlenstoffarmen Stahl,
Figur 7      die Temperaturverteilung über der Stranglänge errechnet auf Basis des erfindungsgemäßen Temperaturberechnungsmodells,
Figur 8      eine isothermische Darstellung der Temperaturverteilung berechnet nach dem erfindungsgemäßen Temperaturberechnungsmodell und in
Figur 9      in schematischer Darstellung eine zur Durchführung des erfindungsgemäßen Gießverfahrens eingerichtete Stranggießanlage

Kern des beim erfindungsgemäßen Gießverfahrens zur Anwendung kommenden Temperaturberechnungsmodelles, dem DSC-Programm/Modell, ist die Berechnung der Strangtemperatur und der Erstarrungslänge (Lage der Sumpfspitze). Die Berechnung erfolgt über ein Finite-Differenzen-Verfahren. Der Materialblock oder Materialabschnitt, das heißt beim Stranggießen der entstehende Metallstrang, wird dabei in kleine Elemente unterteilt, so dass die Geometrie der Kokille, der Strangführung und die Abmessungen der Bramme berücksichtigt werden. Die Randbedingungen können mit den Abmessungen der Kühlzonen, der Wassermengen und der Temperatur des Kühlwassers und der Umgebungstemperatur formuliert werden. Während der Berechnung werden die Prozessgrößen wie Gießgeschwindigkeit und Gießtemperatur berücksichtigt und gehen bei einer Änderung sofort und unmittelbar in die Neuberechnung ein. Als Ergebnis ergeben sich eine Temperaturverteilung im Strang, eine dazu korrelierende entsprechende Schalendicke des Stranges und eine Erstarrungslänge im Strang.

Basis der Temperaturberechnung ist die Fourier'sche Wärmegleichung (1), in der $c_p$ die spezifische Wärmekapazität des Systems, $\lambda$ die Wärmeleitfähigkeit, $p$ die Dichte und s die Ortskoordinate darstellen. $T$ gibt die berechnete Temperatur an. Der Term Q auf der rechten Seite berücksichtigt freiwerdende Energien während der Phasenumwandlung (Gleichung 2). Beim Übergang von flüssig nach fest kennzeichnet dieser Term die Schmelzwärme, $f_s$ gibt den Phasenumwandlungsgrad an.

$$\rho c_p \frac{\partial T}{\partial t} - \frac{\partial}{\partial s}\left(\lambda \frac{\partial T}{\partial s}\right) = Q \qquad\qquad (1)$$

$$Q = \rho L \frac{\partial f_s}{\partial t} \tag{2}$$

Als notwendige Eingangsgrößen der Gleichung sind die Wärmeleitung und die Gesamtenthalpie besonders wichtig, da diese Größen das Temperaturergebnis maßgeblich beeinflussen. Die Wärmeleitfähigkeit ist eine Funktion der Temperatur, der chemischen Zusammensetzung und des Phasenanteils und kann experimentell genau ermittelt werden.

Der Gesamtenthalpie H oder die molare Enthalpie des durch einen beim Gießen erstarrenden Materialbereich oder Materialabschnitt oder Metallstrang gebildeten Systems kann über die Gibbs-Energie wie folgt (3) berechnet werden:

$$H = G - T \left( \frac{\partial G}{\partial T} \right)_p \tag{3}$$

mit der molaren Gibbs Energie G des Systems. Für eine Phasenmischung kann die Gibbs-Energie des Gesamtsystems über die Gibbs Energien der Reinphasen sowie deren Phasenanteilen berechnet werden

$$G = f^l G^l + f^\gamma G^\gamma + f^{p\alpha} G^{p\alpha} + f^{e\alpha} G^{e\alpha} + f^{ec} G^{ec} \tag{4}$$

mit den Phasenanteilen $f^\varphi$ der Phase $\varphi$ und $G^\varphi$ der molaren Gibbs Energie dieser Phase. Für die Austenit-, Ferrit- und Flüssigphase ($\varphi$) ergibt sich die Gibbs Energie zu

$$G^\Phi = \sum_{i=1}^{n} x_i^\Phi G_i^\Phi + RT \sum_{i=1}^{n} x_i ln(x_i) + {}^E G^\Phi + {}^{magn} G^\Phi \tag{5}$$

$$ {}^E G^\phi = \sum x_i x_j \, {}^a L_{i,j}^\Phi (x_i - x_j)^a + \sum x_i x_j x_k L_{i,j,k}^\Phi \tag{6}$$

$$ {}^{magn} G^\phi = RT ln(1 + \beta) f(\tau) \tag{7}$$

In Gleichung (4) entsprechen die Terme jeweils einer Einzelelement-Energie, einem Beitrag für die ideale Mischung sowie einem Beitrag für die nicht ideale Mischung und der magnetischen Energie (Gleichung 7). Bei bekannter Gibbs-Energie des Systems kann daraus die molare spezifische Wärmekapazität berechnet werden:

$$c_p = -T \left( \frac{\partial^2 G}{\partial T^2} \right)_p \tag{8}$$

Die Parameter der Terme der Gleichungen (5) - (7) sind in einer Thermocalc- und Matcalc-Datenbank aufgeführt und können zur Ermittlung der Gibbs-Energien einer Stahlzusammensetzung verwendet werden. Mit Hilfe einer mathematischen Ableitung ergibt sich daraus die Gesamtenthalpie dieser Stahlzusammensetzung.

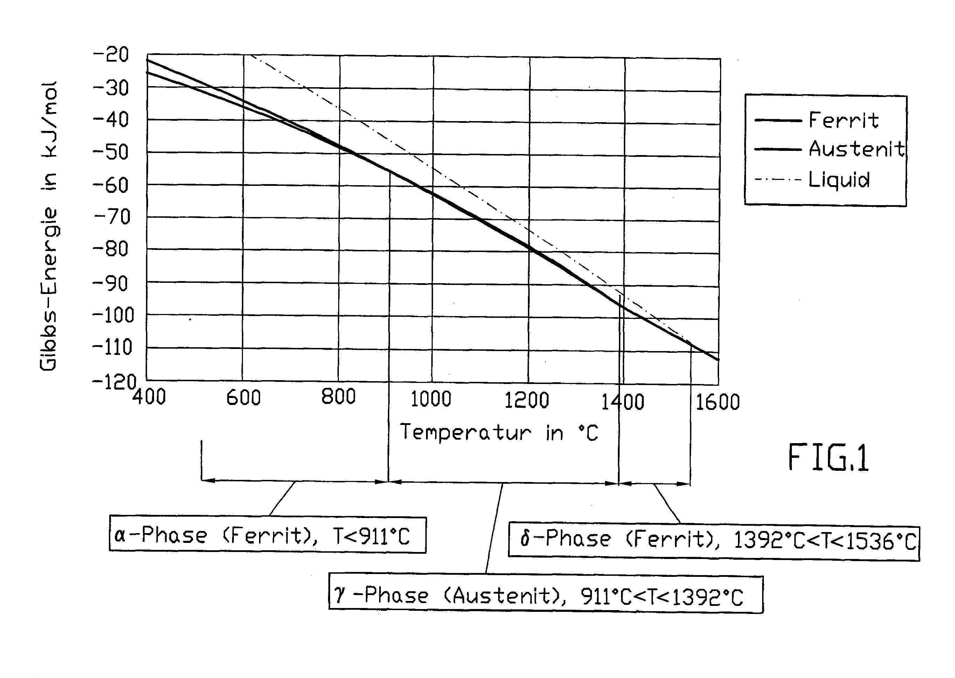

Figur 1 zeigt die Darstellung der Gibbs-Energie für Reineisen. Man kann erkennen, dass die einzelnen Phasen Ferrit, Austenit und die Flüssigphase für einen bestimmten charakteristischen Temperaturbereich ein Minimum einnehmen, bei dem diese Phasen stabil sind.

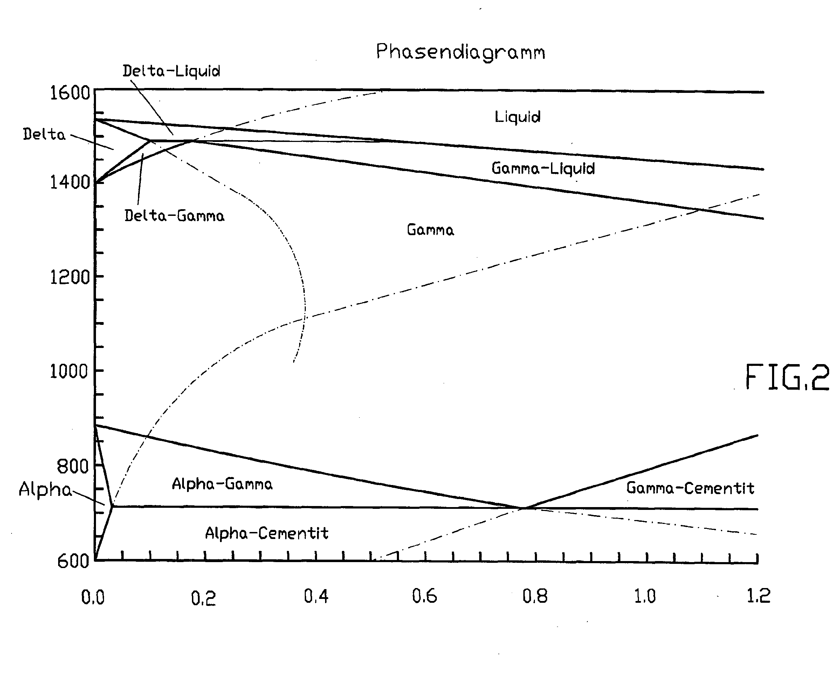

In Figur 2 sind die Phasengrenzen einer Fe-C-Legierung mit 0,02% Si, 0,310% Mn, 0,018 % P, 0,007% S, 0,02% Cr, 0,02% Ni, 0,027% Al und variablem C-Gehalt dargestellt. Mit der Formulierung der Gibbs-Energie ist es möglich, ein solches Phasendiagramm mit einer beliebigen chemischen Zusammensetzung zu konstruieren und die stabilen Phasenanteile darzustellen.

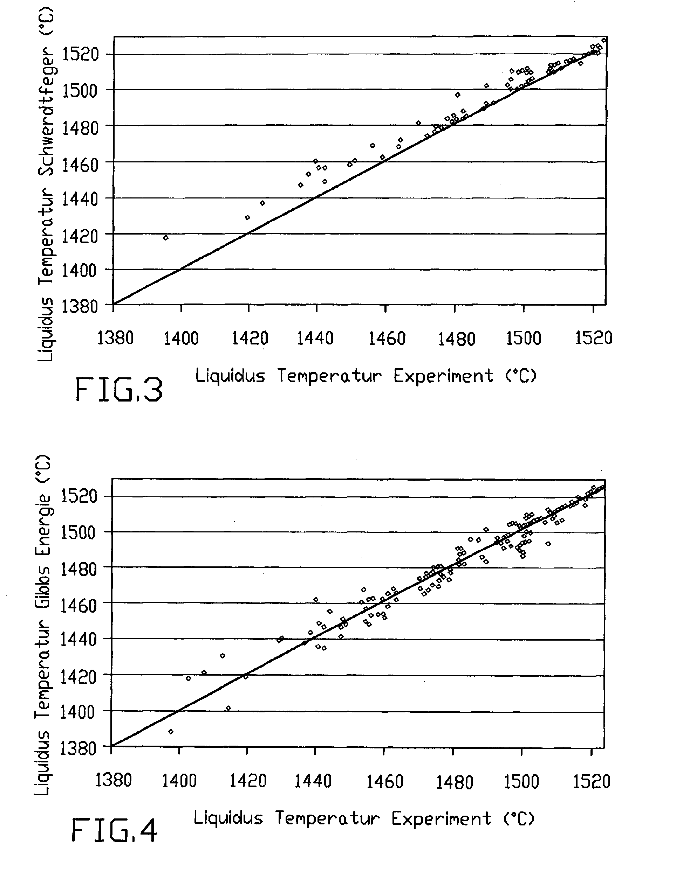

Für die Temperaturberechnung nach den Gleichungen (1)-(3) ist es zunächst notwendig, die Liquidus- und Solidus-Temperaturen zu ermitteln, die den Übergang der Schmelze zur festen Phase angeben. Fig. 3 vergleicht die berechneten Liquidustemperaturen (schwarze Rechtecke) nach Schwerdtfeger mit den experimentell ermittelten Temperaturen (Linie). Bei sehr hohen Temperaturen ist die Übereinstimmung gut, bei tiefen Temperaturen nimmt die Übereinstimmung deutlich ab. Die berechneten Temperaturen liegen über den experimentellen Temperaturen. Analog zeigt Fig. 4 den Vergleich der berechneten (schwarze Rechtecke) mit den experimentell (Linie) ermittelten Liquidustemperaturen nach Gibbs.

Die Gültigkeitsbereiche des Gibbs- und des Schwerdtfeger-Modells in Bezug auf die Zusammensetzung einer Metalllegierung zeigt die nachstehende Tabelle:

|  | Gibbs | Schwerdtfeger |
|---|---|---|
| • C | < 5% | < 0,9% |
| • Mn | < 20% | < 2,0% |
| • Si | < 5% | < 0,5% |
| • Cr | < 30% | < 1,0% |
| • Ni | < 10% | < 1,0% |
| • Mo | < 10% | < 0,5% |
| • Cu | < 1% | < 0,5% |
| • Nb | < 5% | < 1,0% |
| • Ti | < 2% | < 0,2% |
| • V | <5% | < 0,2% |
| • Al | < 5% | < 0,1% |
| • S | Spuren | < 0,1 % |
| • P | Spuren | < 0,1 % |

- Schwerdtfeger: Grenzen gültig mit einer angegebenen Genauigkeit DT = 2°C
- Gibbs: Gültigkeitsbereich nach Thermocalc/Matcalc- Datenbanken

In der Tabelle sind die Gültigkeitsbereiche des Gibbs- und des Schwerdtfeger-Modells aufgeführt. Es wird deutlich, dass der Gültigkeitsbereich des Gibbs-Modells einen sehr viel größeren Analysebereich aufweist als das Schwerdtfeger-Modell. Die in den Thermocalc/Matcalc-Datenbanken aufgeführten Grenzen decken die heute weltweit hergestellten Karbon- und Edelstähle nahezu vollständig ab. Mit diesen Eingangsdaten lassen sich die Liquidus- und Solidustemperatur und die Gesamtenthalpie eines untersuchten Werkstoffes mit größtmöglicher Genauigkeit ermitteln.

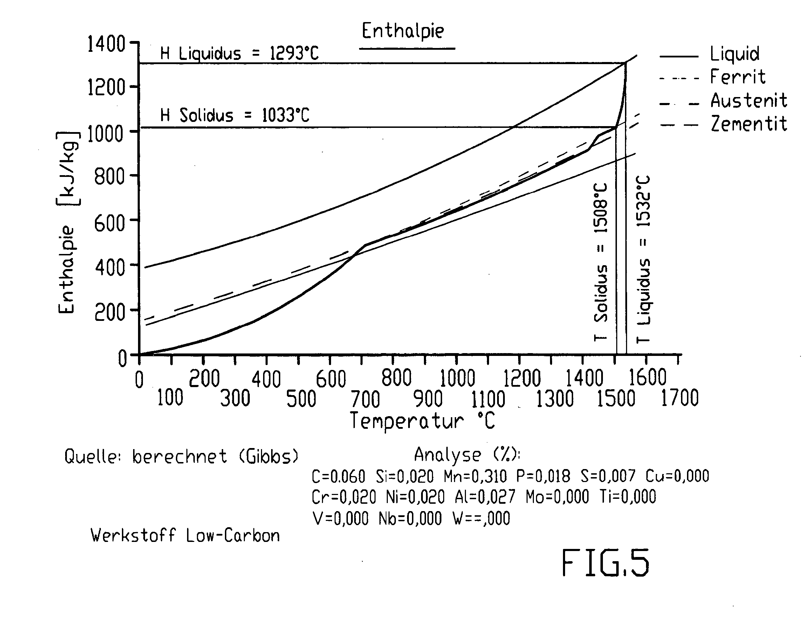

Figur 5 zeigt den Verlauf der Gesamtenthalpie nach Gibbs für einen kohlenstoffarmen Stahl (Low Carbon) als Funktion der Temperatur. Außerdem sind im Bild die Solidus- und Liquidustemperatur dargestellt.

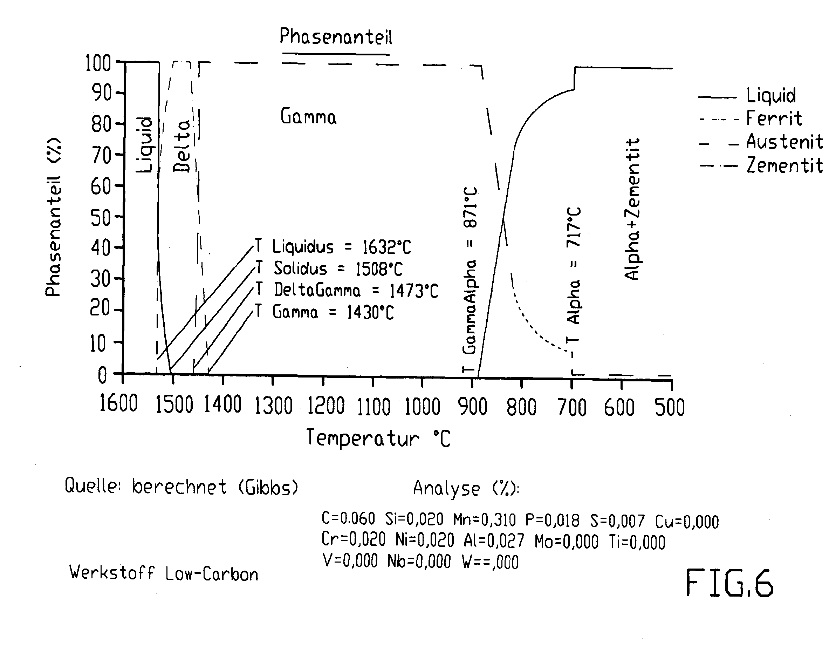

In Figur 6 sind die Phasenanteile nach Gibbs als Funktion der Temperatur berechnet. Man erkennt im Bild die Bereiche der Schmelze, der Delta-, Gamma-, Alpha- und Zementit-Phase.

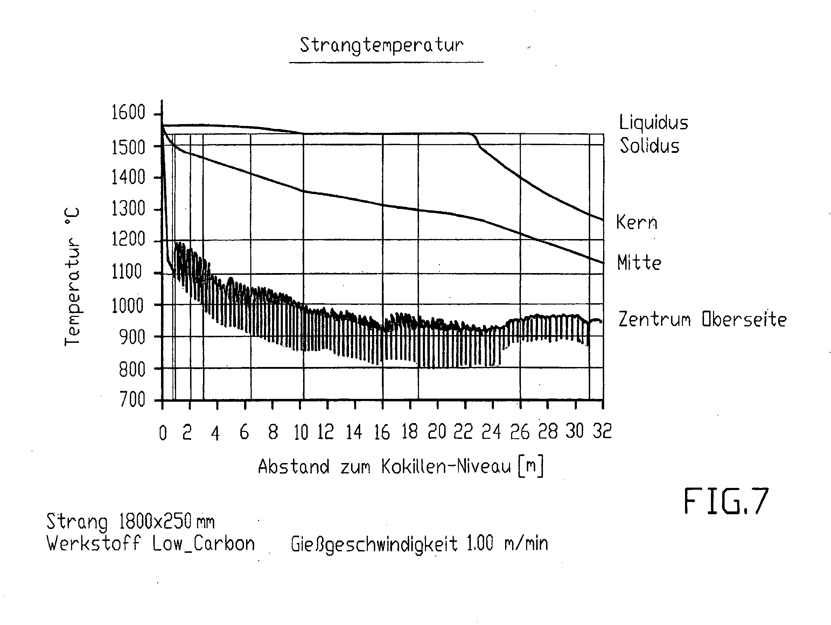

Die Temperaturverteilung, die mit den Gibbs-Energien vermittelt wird, ist in Figur 7 über der Stranglänge dargestellt. Es sind jeweils die Temperaturen in der Strangmitte an der Oberfläche und im Kern zu sehen. Außerdem ist die mittlere Temperatur aus verschiedenen Dickenlagen dargestellt. Die Solidus- und Liquidus-Linien geben an, an welcher Stelle der Strang durcherstarrt ist. Man kann erkennen, dass für diese Gießgeschwindigkeit die Strangmitte nach etwa 23,6 m erstarrt ist, was der Erstarrungslänge (Lage der Sumpfspitze) entspricht.

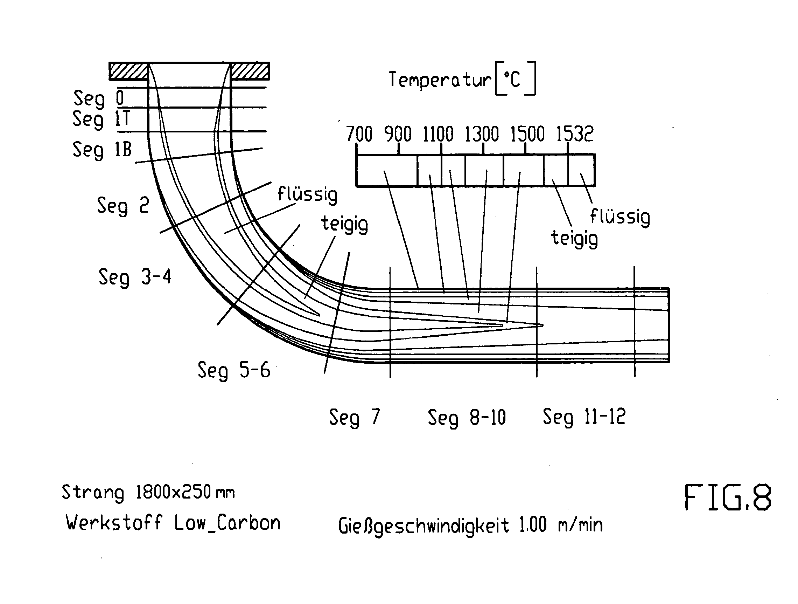

Anhand der Temperatur-Isothermen kann man die Erstarrung des Stranges verfolgen. Figur 8 zeigt die Temperaturverteilung der Isothermen im Strang. Die helle Farbe gibt den flüssigen Kern an. Der Kern ist bis zu den Segmenten 8 - 10 flüssig, danach nimmt der Anteil der festen Phase zu. Die Erstarrungslänge beträgt 23,6 m. Die Darstellung erlaubt einen schnellen Überblick der flüssigen und festen Phase in gegossenem Strang.

In Kenntnis des Wertes für die exakte Erstarrungslänge lässt sich dieser Wert dann für die Steuerung und Regelung der hydraulischen Anstellung der RollenSegmente einer Stranggießanlage für die Durchführung einer sogenannten "Soft Reduction" verwenden. Durch Anwendung des durch das Temperaturberechnungsmodell gekennzeichneten erfindungsgemäßen Gießverfahrens lässt sich eine optimale Anstellung der (Rollen-)Segmente erreichen und die Innenqualität verbessern. Untersuchungen haben gezeigt, dass die Innenqualität von derartig hergestellten Metallsträngen oder Brammen bei den verschiedensten Werkstoffqualitäten durch den Einsatz des erfindungsgemäßen Verfahrens verbessert wird.

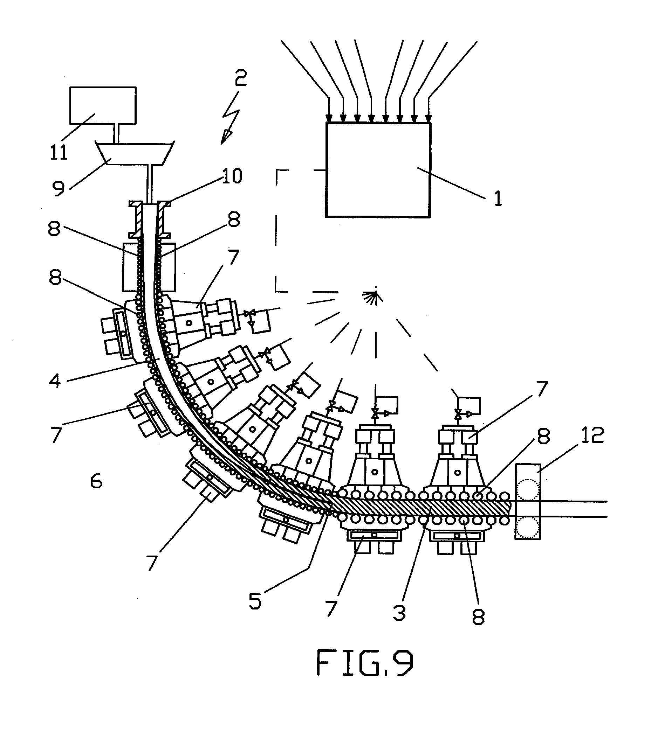

Die Figur 9 zeigt in schematischer Darstellung eine für die Anwendung des erfindungsgemäßen Gießverfahrens eingerichtete und mit einer Recheneinrichtung 1 oder Rechnereinrichtung ausgestattete, insgesamt mit 2 bezeichnete Stranggießanlage, wobei die Recheneinrichtung 1 mit einem als metallurgisches Prozessmodell ausgebildeten Temperaturberechnungsmodell ausgestattet ist, das eine DTR- oder DSC (Dynamische Temperatur-Regelung/Dynamic Solidification Control)-Regelung aufweist oder darauf beruht. Mit dem Temperaturberechnungsmodell lässt sich die im Inneren eines aus flüssigem Metall gegossenen, erstarrenden Materialblocks oder Materialabschnitts herrschende Temperaturverteilung berechnen. Im Ausführungsbeispiel handelt es sich bei dem Materialblock oder Materialabschnitt um den aus Metall bestehenden Gießstrang 3 oder Metallstrang. Der Gießstrang 3 weist einen flüssigen Sumpf 4 auf, dessen die Erstarrungslänge des Gießstrangs 3 definierende Sumpfspitze 5 annähernd im in Gießrichtung betrachteten Endbereich der Sekundärkühlung 6 ausgebildet ist. An dem Gießstrang 3 sind zu dessen Verformung und Stützung sechs Rollensegmente 7 oder allgemein Segmente ausgebildet, die mit Stützrollen oder Strangführungsrollen 8 versehen und hydraulisch verstellbar ausgebildet sind. Die Strangführungsrollen 8 laufen teils leer oder sind anstellbar und drehangetrieben ausgebildet. Die Stranggießanlage 2 weist ein Verteilergefäß 9 und eine daran angeschlossene Stranggießkokille 10 auf. Aus einer Gießpfanne 11 läuft Stahlschmelze in das Verteilergefäß 9 und von dort aus in die Kokille 10 ein. Unterhalb der Kokille 10 sind Strangführungsrollen 8 zur Abstützung des Gießstranges 3 ausgebildet, der in diesem Bereich erst eine sehr dünne Strangschale aufweist. Der Gießstrang 3 durchläuft einen kreisbogenförmigen Bereich und läuft dann in einer Richtzone aus und kann dann zum Beispiel ein unmittelbar nachgeordnetes Walzgerüst 12 durchlaufen. Zur Kühlung des Gießstranges 3 wird dieser im Bereich der Sekundärkühlung 6 zum Beispiel durch aufgespritztes Wasser oder durch eine mit einer Innenkühlung versehene Strangführung gekühlt. Die Versorgung des Gießstranges mit der gewünschten Menge an Kühlmittel, aber auch die Einstellung der Gießgeschwindigkeit wird über einen geschlossenen oder offenen Regelkreis 13 mit Hilfe der Rechner- oder Recheneinrichtung 1 durchgeführt. Dabei wird in der Recheneinrichtung 1 mittels des Temperaturberechnungsmodells die Temperaturverteilung im Gießstrang 3 und insbesondere die aktuelle Lage der Sumpfspitze 5 in der vorstehend erläuterten Art und Weise berechnet, und zwar Online. Die mit diesem Berechnungsprozess erhaltenen Ausgangsgrößen sind ebenfalls in der Recheneinheit 1 verarbeitbar und werden dann im Rahmen des offenen oder geschlossenen Regel- und/oder Steuerkreises 13 dazu verwendet, die gewünschten Gießparameter, wie Kühlmittelzulauf, Gießgeschwindigkeit, Anstellung der Rollensegmente 7 oder weitere festzulegen sowie situationsbedingt zu ändern. Hierbei wird in der das metallurgische Temperaturberechnungsmodell abbildenden Rechnereinrichtung 1 das Auftreten von Phasen wie oben beschrieben im Wege der Erfassung der jeweiligen Gibbs'schen Energie berücksichtigt.

**Patentansprüche**

1. Gießverfahren zur Herstellung eines aus flüssigem Metall gegossenen Materialblocks oder Materialabschnitts, bei welchem die im Innern des Materialblocks oder Materialabschnitts herrschende Temperaturverteilung mittels eines auf einer dynamischen Temperatur-Regelung (Dynamic Solidification Control) beruhenden Temperaturberechnungsmodells berechnet wird, wobei in einem Berechnungsschritt die Gesamtenthalpe des durch den Materialblock oder Materialabschnitt gebildeten Systems ermittelt sowie als eine Eingangsgröße in dem Temperaturberechnungsmodell verarbeitet wird und eine oder mehrere Ausgangsgröße des Temperaturberechnungsmodells im Regelungs- und/oder Steuerungsprozess des Gießprozesses verwendet wird/werden,
**dadurch gekennzeichnet,**
**dass** die Gesamtenthalpie aus der Summe der freien molaren Enthalpien (Gibbs'schen Energien) aller im Materialblock oder Materialabschnitt aktuell vorhandenen Phasen und/oder Phasenanteile berechnet wird.

2. Gießverfahren nach Anspruch 1, **dadurch gekennzeichnet, dass** im Rahmen des Temperaturberechnungsmodells die Gesamtenthalpie als freie molare Gesamtenthalpie (H) des Systems mittels der Gibbs-Energie (G) bei konstantem Druck (p) nach der Gleichung

$$H = G - T\left(\frac{\partial G}{\partial T}\right)_p$$

ermittelt wird, wobei

H = die molare Enthalpie des Systems,
G = die Gibbs-Energie des Systems,
T = die absolute Temperatur in Kelvin und
p = den Druck

des Systems bedeuten.

3. Gießverfahren nach Anspruch 1 oder 2, **dadurch gekennzeichnet, dass** im Rahmen des Temperaturberechnungsmodells die Temperaturverteilung mittels der Fourier'schen Wärmegleichung

$$\rho c_p \frac{\partial T}{\partial t} - \frac{\partial}{\partial s}\left(\lambda \frac{\partial T}{\partial s}\right) = Q$$

ermittelt wird, wobei

$\rho$ = die Dichte,
$c_p$ = die spezifische Wärmekapazität bei konstantem Druck,
T = die berechnete absolute Temperatur in Kelvin,
$\lambda$ = die Wärmeleitfähigkeit,
s = die zugehörige Ortskoordinate,
t = die Zeit und
Q = die während der Phasenumwandlung flüssig - fest frei werdende Energie

des Systems bedeuten.

4. Gießverfahren nach einem der vorhergehenden Ansprüche, **dadurch gekennzeichnet, dass** im Rahmen des Temperaturberechnungsmodells die während der Phasenumwandlung von flüssig nach fest frei werdende Energie (Q) mittels der Gleichung

$$Q = \rho L \frac{\partial f_s}{\partial t}$$

ermittelt wird, wobei

Q = die frei werdende Energie während der Phasenumwandlung,
$\rho$ = die Dichte,
L = die latente Schmelzwärme,
t = die Zeit und
$f_g$ = den Phasenumwandlungsgrad

des Systems bedeuten.

5. Gießverfahren nach einem der vorhergehenden Ansprüche, **dadurch gekennzeichnet, dass** im Rahmen des Temperaturberechnungsmodells für eine Phasenmischung die Gibbs-Energie (G) des Gesamtsystems als Summe der die Gibbs-Energien der Reinphasen sowie deren Phasenentellen nach der Gleichung

$$G = f^l G^l + f^\gamma G^\gamma + f^{p\alpha} G^{p\alpha} + f^{a\alpha} G^{a\alpha} + f^{ac} G^{ac}$$

ermittelt wird, wobei

G = die Gibbs-Energie des Systems,
$f^l$ = der Gibbs-Energieanteil der jeweiligen Phase oder des jeweiligen Phasenanteils am Gesamtsystem und
$G^l$ = die Gibbs-Energie der jeweiligen Reinphase oder des jeweiligen Phasenanteils

des Systems bedeuten.

6. Gießverfahren nach einem der vorhergehenden Ansprüche, **dadurch gekennzeichnet, dass** im Rahmen des Temperaturberechnungsmodells für eine System mit Anteilen an Austenit-, Ferrit- und Flüssigphase die Gibbs-Energie nach folgender Gleichung

$$G^{\Phi} = \sum_{i=1}^{n} x_i^{\Phi} G_i^{\Phi} + RT \sum_{i=1}^{n} x_i ln(x_i) + {}^{E}G^{\Phi} + {}^{magn}G^{\Phi}$$

ermittelt wird, wobei

$G^{\Phi}$ = die Gibbs-Energie einer jeweiligen Phase $\Phi$,
$x_i^{\Phi}$ = der Molenbruch der i-ten Komponente der jeweiligen Phase $\Phi$,
$G_i^{\Phi}$ = die Gibbs-Energie der i-ten Komponente der jeweiligen Phase $\Phi$,
R = die allgemeine Gaskonstante,
T = die absolute Temperatur in Kelvin,
${}^{E}G^{\Phi}$ = die Gibbs-Energie für eine nicht Ideale Mischung und
${}^{magn}G^{\Phi}$ = die magentische Energie

des Systems bedeuten.

**7.** Gießverfahren nach Anspruch 6, **dadurch gekennzeichnet, dass** im Rahmen des Temperaturberechnungsmodells die Gibbs-Energie für eine nicht ideale Mischung (${}^{E}G^{\Phi}$) nach der Gleichung

$$ {}^{E}G^{\phi} = \sum x_i x_j \; {}^{a}L_{i,j}^{\Phi}(x_i - x_j)^a + \sum x_i x_j x_k L_{i,j,k}^{\Phi} $$

ermittelt wird, wobei

${}^{E}G^{\Phi}$ = die Gibbs-Energie für eine nicht ideale Mischung,
$x_i$ = den Molenbruch der i-ten Komponente,
$x_j$ = den Molenbruch der j-ten Komponente,
$x_k$ = den Molenbruch der k-ten Komponente,
a = einen Korrekturterm,
${}^{a}L_{i,J}^{\Phi} = {}^{a}L_{I,J}^{\Phi}$ = Wechselwirkungsparameter verschiedener Ordnung und
${}^{a}L_{iJ,k}^{\Phi} = {}^{a}L_{I,J}^{\Phi}$ = Wechselwirkungsparameter verschiedener Ordnung

des Gesamtsystems bedeuten.

**8.** Gießverfahren nach Anspruch 6, **dadurch gekennzeichnet, dass** im Rahmen des Temperaturberechnungsmodells, der Anteil der magnetischen Energie (${}^{magn}G^{\Phi}$) nach der Gleichung

$$ {}^{magn}G^{\phi} = RT ln(1 + \beta) f(\tau) $$

ermittelt wird, wobei

${}^{magn}G^{\Phi}$ = die magnetische Energie,
R = die allgemeine Gaskonstante,
T = die absolute Temperatur in Kelvin,
$\beta$ = Magnetischer Moment und
$f(\tau)$ = den Anteil am Gesamtsystem in Abhängigkeit von der normierten Curietemperatur ($\tau$)

des Gesamtsystems bedeuten.

**9.** Gießverfahren nach einem der vorhergehenden Ansprüche, **dadurch gekennzeichnet, dass** ein Stranggussstrang gegossen wird, wobei mittels des Temperaturberechnungsmodells als Ausgangsgröße(n) die Lage der Sumpfspitze und/oder die Temperaturverteilung in dem den Stranggussstrang ausbildenden Materialblock oder Materialabschnitt ermittelt wird.

**10.** Gießverfahren nach einem der vorhergehenden Ansprüche, **dadurch gekennzeichnet, dass** es als Bestandteil eines Steuerungs- und/oder Regelungsverfahrens beim Stranggießen von Metall, Insbesondere eisenhaltigem Metall, vorzugsweise Stahl, ausgeführt wird.

**11.** Gießverfahren nach Anspruch 9 oder 10, **dadurch gekennzeichnet, dass** anhand der Lage der Sumpfspitze die Erstarrungslänge eines Stranggussstranges ermittelt und die Erstarrungslänge als eine Eingangsgröße der Steuerung und/oder Regelung der hydraulischen Anstellung der Segmente der Stranggussanlage längs des Stranggussstranges zugeführt wird.

**12.** Gießverfahren nach einem der vorhergehenden Ansprüche, **dadurch gekennzeichnet, dass** mittels des als metallurgisches Prozessmodell ausgebildetem Temperaturberechnungsmodell die Sekundärkühlung einer Stranggießanlage gesteuert wird.

**13.** Gießverfahren nach einem der vorhergehenden Ansprüche, **dadurch gekennzeichnet, dass** mittels des Temperaturberechnungsmodells der Temperaturverlauf im Materialblock oder Materialabschnitt werkstoffabhängig ermittelt und eingestellt wird.

**14.** Verwendung eines Gießverfahrens nach einem der vorhergehenden Ansprüche beim Stranggießen von metallischem Werkstoff In einer Stranggießanlage zur Vorhersage und Kontrolle der Temperaturverteilung sowie zur Ermittlung der Lage der Sumpfspitze oder der Erstarrungslänge in einem gegossenen Gießstrang.

**15.** Verwendung des Gießverfahrens nach Anspruch 14 zur Online-Ermittlung der Temperaturverteilung und der Lage der Sumpfspitze sowie zur Steuerung des Stranggießprozesses.

**16.** Verwendung des Gießverfahrens nach Anspruch 14 oder 15 bei der Durchführung eines Soft Reduction - Prozesses beim Stranggießen,

**17.** Verwendung des Gießverfahrens nach einem der Ansprüche 14-16 zur Erhöhung der Prozessstabilität und Produktverbesserung beim Stranggießen.

**Claims**

**1.** Casting method for producing a material block or material section cast from liquid metal, in which the temperature distribution prevailing in the interior of the material block or material section is calculated by means of a temperature calculation model based on dynamic temperature regulation (Dynamic Solidification Control), wherein in a calculation step the total enthalpy of the system formed by the material block or material section is determined and is processed as an input variable in the temperature calculation model and one or more output variable(s) of the temperature calculation model is/are used in the regulating process and/or control process of the casting process, **characterised in that** the total enthalpy is calculated from the sum of the free molar enthalpies (Gibbs energy) of all phases and/or phase fractions currently present in the material block or material section.

**2.** Casting method according to claim 1, **characterised in that** within the scope of the temperature calculation model the total enthalpy is calculated as a free molar total enthalpy (H) of the system by means of the Gibbs energy (*G*) at constant pressure (*p*) by the equation

$$H = G - T \left( \frac{\partial G}{\partial T} \right)_p$$

wherein

$H$ = the molar enthalpy of the system,
$G$ = the Gibbs energy of the system,
$T$ = the absolute temperature in Kelvin and
$p$ = the pressure

of the system.

3. Casting method according to claim 1 or 2, **characterised in that** within the scope of the temperature calculation model the temperature distribution is determined by means of the Fourier thermal equation

$$\rho c_p \frac{\partial T}{\partial t} - \frac{\partial}{\partial s}\left(\lambda \frac{\partial T}{\partial s}\right) = Q$$

wherein

$\rho$ = the density,
$c_p$ = the specific thermal capacity at constant pressure,
$T$ = the calculated absolute temperature in Kelvin,
$\lambda$ = the thermal conductivity,
$s$ = the associated positional co-ordinate,
$t$ = the time and
$Q$ = the energy liberated during phase conversion from liquid to solid

of the system.

4. Casting method according to any one of the preceding claims, **characterised in that** within the scope of the temperature calculation model the energy (Q) liberated during the phase conversion from liquid to solid is determined by means of the equation

$$Q = \rho L \frac{\partial f_s}{\partial t}$$

wherein

$Q$ = the energy liberated during the phase conversion,
$\rho$ = the density,
$L$ = the latent melt heat,
$t$ = the time and
$f_s$ = the degree of phase conversion

of the system.

5. Casting method according to any one of the preceding claims, **characterised in that** within the scope of the temperature calculation model for a phase mixture the Gibbs energy ($G$) of the overall system is determined as a sum of the Gibbs energies of the pure phases as well as the phase fractions thereof by the equation

$$G = f^l G^l + f^\gamma G^\gamma + f^{p\alpha} G^{p\alpha} + f^{s\alpha} G^{s\alpha} + f^{sc} G^{sc}$$

wherein

$G$ = the Gibbs energy of the system,
$f^i$ = the Gibbs energy fraction of the respective phase or of the respective phase fraction at the entire system and
$G^i$ = the Gibbs energy of the respective pure phase or of the respective phase fraction

of the system.

6. Casting method according to any one of the preceding claims, **characterised in that** within the scope of the temperature calculation model for a system with fractions of austenite, ferrite and liquid phase the Gibbs energy is determined by the following equation

$$G^{\Phi} = \sum_{i=1}^{n} x_i^{\Phi} G_i^{\Phi} + RT \sum_{i=1}^{n} x_i ln(x_i) + {}^{E}G^{\Phi} + {}^{magn}G^{\Phi}$$

wherein

$G^{\Phi}$ = the Gibbs energy of a respective phase $\Phi$,
$x_i^{\Phi}$ = the mol fraction of the $i$th component of the respective phase $\Phi$,
$G_i^{\Phi}$ = the Gibbs energy of the $i$th component of the respective phase $\Phi$,
$R$ = the general gas constant,
$T$ = the absolute temperature in Kelvin,
${}^{E}G^{\Phi}$ = the Gibbs energy for a non-ideal mixture and
${}^{magn}G^{\Phi}$ = the magnetic energy

of the system.

7. Casting method according to claim 6, **characterised in that** within the scope of the temperature calculation model the Gibbs energy for a non-ideal mixture (${}^{E}G^{\Phi}$) is determined according to the equation

$$ {}^{E}G^{\phi} = \sum x_i x_j \, {}^{a}L_{i,j}^{\Phi} (x_i - x_j)^{a} + \sum x_i x_j x_k L_{i,j,k}^{\Phi} $$

wherein

${}^{E}G^{\Phi}$ = the Gibbs energy for a non-ideal mixture,
$x_i$ = the mol fraction of the $i$th component,
$x_j$ = the mol fraction of the $j$th component,
$x_k$ = the mol fraction of the $k$th component,
$a$ = a correction term,
${}^{a}L_{i,j}^{\Phi} = {}^{a}L_{i,j}^{\Phi}$ = interaction parameter of different order and
${}^{a}L_{i,j,k}^{\Phi} = {}^{a}L_{i,j}^{\Phi}$ = interaction parameter of different order

of the overall system.

8. Casting method according to claim 6, **characterised in that** within the scope of the temperature calculation model the fraction of the magnetic energy (${}^{magn}G^{\Phi}$) is determined by the equation

$$ {}^{magn}G^{\phi} = RT ln(1 + \beta) f(\tau) $$

wherein

${}^{magn}G^{\Phi}$ = the magnetic energy,
$R$ = the general gas constant,
$T$ = the absolute temperature in Kelvin,
$\beta$ = magnetic moment and
$f(\tau)$ = the fraction of the overall system in dependence on the normalised Curie temperature ($\tau$)

of the overall system.

9. Casting method according to any one of the preceding claims, **characterised in that** a continuously cast strip is cast, wherein the position of the end of the liquid phase and/or the temperature distribution in the material block or material section forming the continuously cast strip is or are, as output variable(s), determined by means of the temperature calculation model.

10. Casting method according to any one of the preceding claims, **characterised in that** it is executed as a component of a control method and/or regulating method in the continuous casting of metal, particularly ferrous metal, preferably steel.

11. Casting method according to claim 9 or 10, **characterised in that** the solidification length of a continuously cast strip is determined on the basis of the position of the end of the liquid phase and the solidification length is supplied as an input variable of the control and/or regulation of the hydraulic adjustment of the segments of the continuous casting plant along the continuously cast strip.

12. Casting method according to any one of the preceding claims, **characterised in that** the secondary cooling of a continuous casting plant is controlled by means of the temperature calculation model constructed as a metallurgical process model.

13. Casting method according to any one of the preceding claims, **characterised in that** the temperature plot in the material block or material section is determined and set in dependence on material by means of the temperature calculation model.

14. Use of a continuous casting method according to any one of the preceding claims for continuous casting of metallic material in a continuous casting plant for prediction and control of the temperature distribution as well as determination of the position of the end of the liquid phase or the solidification length in a cast strip.

15. Use of the casting method according to claim 14 for on-line determination of the temperature distribution and the position of the end of the liquid phase as well as for control of the continuous casting process.

16. Use of the casting method according to claim 14 or 15 for carrying out a soft-reduction process in continuous casting.

17. Use of the casting method according to any one of claims 14 to 16 for increasing process stability and product improvement in continuous casting.

**Revendications**

1. Procédé de coulée pour fabriquer un bloc de matière ou un tronçon de matière coulé à partir de métal liquide, dans lequel on calcule la distribution de température qui règne à l'intérieur du bloc de matière ou du tronçon de matière au moyen d'un modèle de calcul de la température qui s'appuie sur un réglage dynamique de la température (Dynamic Solidification Control), dans lequel on détermine, dans une étape de calcul, l'enthalpie globale du système formé par le bloc de matière ou par le tronçon de matière et on la traite sous la forme d'une valeur d'entrée dans le modèle de calcul de la température, et on utilise une ou plusieurs valeurs de départ du modèle de calcul de la température dans le processus de réglage et/ou de commande du processus de coulée, **caractérisé en ce qu'**on calcule l'enthalpie globale à partir de la somme des enthalpies molaires libres (énergies de Gibbs) de toutes les phases et/ou de toutes les fractions de phases en vigueur dans le bloc de matière ou dans le tronçon de matière.

2. Procédé de coulée selon la revendication 1, **caractérisé en ce que**, dans le cadre du modèle de calcul de la température, on détermine l'enthalpie globale sous la forme de l'enthalpie molaire libre globale (H) du système au moyen de l'énergie de Gibbs (G) sous pression constante (p) conformément à l'équation :

$$H = G - T\left(\frac{\partial G}{\partial T}\right)_p$$

dans laquelle :

H représente l'enthalpie molaire du système ;
G représente l'énergie de Gibbs du système ;
T représente la température absolue en kelvin ; et
p représente la pression du système.

3. Procédé de coulée selon la revendication 1 ou 2, **caractérisé en ce que**, dans le cadre du modèle de calcul de la température, on détermine la distribution de la température au moyen de l'équation de la chaleur de Fourier

$$\rho c_p \frac{\partial T}{\partial t} - \frac{\partial}{\partial s}\left(\lambda \frac{\partial T}{\partial s}\right) = Q$$

dans laquelle :

$\rho$ représente la masse volumique ;
$c_p$ représente la capacité thermique spécifique sous pression constante ;
T représente la température absolue calculée en kelvin ;
$\lambda$ représente la conduction thermique ;
s représente les coordonnées spatiales correspondantes ;
t représente le temps ; et
Q représente l'énergie du système qui se libère au cours de la transformation de phase liquide-solide.

4. Procédé de coulée selon l'une quelconque des revendications précédentes, **caractérisé en ce que**, dans le cadre du modèle de calcul de la température, on détermine l'énergie (Q) qui se libère au cours de la transformation de phase liquide vers solide, au moyen de l'équation :

$$Q = \rho L \frac{\partial f_s}{\partial t}$$

dans laquelle :

Q représente l'énergie qui se libère au cours de la transformation de phase ;
$\rho$ représente la masse volumique ;
L représente la chaleur latente de la masse fondue ;
t représente le temps ; et
$f_s$ représente le degré de transformation de phase du système.

5. Procédé de coulée selon l'une quelconque des revendications précédentes, **caractérisé en ce que**, dans le cadre du modèle de calcul de la température, pour un mélange de phases, on détermine l'énergie de Gibbs (G) du système global sous la forme de la somme des énergies de Gibbs des phases pures et de leurs fractions de phases, conformément à l'équation :

$$G = f^l G^l + f^\gamma G^\gamma + f^{\gamma\alpha} G^{\gamma\alpha} + f^{\alpha\alpha} G^{\alpha\alpha} + f^{\alpha\alpha} G^{\alpha\alpha}$$

dans laquelle :

G représente l'énergie de Gibbs du système ;
f représente la fraction d'énergie de Gibbs de la phase respective ou de la fraction de phase respective dans le système global ;
$G^1$ représente l'énergie de Gibbs de la phase pure respective ou de la fraction de phase respective du système.

6. Procédé de coulée selon l'une quelconque des revendications précédentes, **caractérisé en ce que**, dans le cadre du modèle de calcul de la température, pour un système comprenant une phase d'austénite, une phase de ferrite et une phase liquide, on détermine l'énergie de Gibbs conformément à l'équation :

$$G^\phi = \sum_{i=1}^{n} x_i^\phi G_i^\phi + RT \sum_{i=1}^{n} x_i ln(x_i) + {}^E G^\phi + {}^{magn} G^\phi$$

dans laquelle :

$G^\Phi$ représente l'énergie de Gibbs d'une phase respective $\Phi$ ;
$x_i^\Phi$ représente la fraction molaire de la ième composante de la phase respective $\Phi$ ;
$G_i^\Phi$ représente l'énergie de Gibbs de la ième composante de la phase respective $\Phi$ ;
R représente la constante générale de gaz ;
T représente la température absolue en kelvin ;
$^EG^\Phi$ représente l'énergie de Gibbs pour un mélange non idéal ; et
$^{magn}G^\Phi$ représente l'énergie magnétique du système.

7. Procédé de coulée selon la revendication 6, **caractérisé en ce que**, dans le cadre du modèle de calcul de la température, on détermine l'énergie de Gibbs pour un mélange non idéal ($^EG^\Phi$) conformément à l'équation :

$$^EG^\Phi = \sum x_i x_j \, {}^aL_{i,j}^\Phi (x_i - x_j)^a + \sum x_i x_j x_k L_{i,j,k}^\Phi$$

dans laquelle :

$^EG^\Phi$ représente l'énergie de Gibbs pour un mélange non idéal ;
$x_i$ représente la fraction molaire de la ième composante ;
$x_j$ représente la fraction molaire de la jième composante ;
$x_k$ représente la fraction molaire de la kième composante ;
a représente un terme de correction ;
$^\alpha L_{IJ}^\Phi = {}^\alpha L_{IJ}^\Phi$ représente des paramètres d'interaction d'ordre différent ;
$^\alpha L_{IJ,K}^\Phi = {}^\alpha L_{IJ}^\Phi$ représente des paramètres d'interaction d'ordre différent du système global.

8. Procédé de coulée selon la revendication 6, **caractérisé en ce que**, dans le cadre du modèle de calcul de la température, on détermine la fraction de l'énergie magnétique ($^{magn}G^\Phi$) conformément à l'équation :

$$^{magn}G^\Phi = RT\ln(1 + \beta)f(\tau)$$

dans laquelle :

$^{magn}G^\Phi$ représente l'énergie magnétique ;
R représente la constante générale de gaz ;
T représente la température absolue en kelvin ;
$\beta$ représente le moment magnétique ; et
$f(\tau)$ représente la fraction du système global en fonction de la température de Curie normalisée ($\tau$) du système global.

9. Procédé de coulée selon l'une quelconque des revendications précédentes, **caractérisé en ce qu'**on coule une barre de coulée continue, dans lequel, au moyen du modèle de calcul de la température sous la forme d'une ou de plusieurs valeurs de départ, on détermine la position de la pointe du cône liquide et/ou la distribution de la température dans le bloc de matière ou dans le tronçon de matière formant la barre de coulée continue.

10. Procédé de coulée selon l'une quelconque des revendications précédentes, **caractérisé en ce qu'**on le met en oeuvre, à titre de partie constitutive d'un procédé de commande et/ou de réglage lors de la coulée continue de métal, en particulier de métal ferreux, de préférence d'acier.

11. Procédé de coulée selon la revendication 9 ou 10, **caractérisé en ce qu'**on détermine, en se basant sur la position de la pointe du cône liquide, la longueur de solidification d'une barre de coulée continue et on achemine la longueur de solidification sous la forme d'une valeur d'entrée à la commande et/ou au réglage de l'installation hydraulique des segments de l'installation de coulée continue le long de la barre de coulée continue.

12. Procédé de coulée selon l'une quelconque des revendications précédentes, **caractérisé en ce qu'**au moyen du modèle de calcul de la température mise en oeuvre à titre de modèle de processus métallurgique, on commande le refroidissement secondaire d'une installation de coulée continue.

**13.** Procédé de coulée selon l'une quelconque des revendications précédentes, **caractérisé en ce qu'**au moyen du modèle de calcul de la température, on détermine et on règle l'allure de la température dans le bloc de matière ou dans le tronçon de matière, en fonction du matériau.

**14.** Utilisation d'un procédé de coulée selon l'une quelconque des revendications précédentes lors de la coulée continue d'un matériau métallique dans une installation de coulée continue pour la prévision et le contrôle de la distribution de la température ainsi que pour la détermination de la position de la pointe du cône liquide ou de la longueur de solidification dans une barre que l'on obtient par coulée continue.

**15.** Utilisation du procédé de coulée selon la revendication 14, pour la détermination en ligne de la distribution de la température et de la position de la pointe du cône liquide ainsi que pour la commande du processus de coulée continue.

**16.** Utilisation du procédé de coulée selon la revendication 14 ou 15, lors de la mise en oeuvre d'un processus par réduction douce (soft réduction) lors de la coulée continue.

**17.** Utilisation du procédé de coulée selon l'une quelconque des revendications 14 à 16 pour l'augmentation de la stabilité du processus et l'amélioration du produit lors de la coulée continue.

FIG.1

Ferrit
Austenit
Liquid

Gibbs-Energie in kJ/mol

Temperatur in °C

α-Phase (Ferrit), T<911°C

δ-Phase (Ferrit), 1392°C<T<1536°C

γ-Phase (Austenit), 911°C<T<1392°C

EP 2 753 439 B1

FIG.2

FIG.3

FIG.4

EP 2 753 439 B1

**FIG.5**

Enthalpie

H Liquidus = 1293°C

H Solidus = 1033°C

Enthalpie [kJ/kg]

Temperatur °C

T Liquidus = 1532°C

T Solidus = 1508°C

Liquid
Ferrit
Austenit
Zementit

Quelle: berechnet (Gibbs)

Analyse (%):
C=0,060 Si=0,020 Mn=0,310 P=0,018 S=0,007 Cu=0,000
Cr=0,020 Ni=0,020 Al=0,020 Mo=0,000 Ti=0,000
V=0,000 Nb=0,000 W==,000

Werkstoff Low-Carbon

22

Phasenanteil

Phasenanteil (%)

Liquid

Delta

Gamma

Alpha+Zementit

T Liquidus = 1632°C
T Solidus = 1508°C
T DeltaGamma = 1473°C
T Gamma = 1430°C

T GammaAlpha = 871°C

T Alpha = 717°C

—— Liquid
----- Ferrit
— — Austenit
—·— Zementit

Temperatur °C

Quelle: berechnet (Gibbs)

Analyse (%):

C=0.060 Si=0,020 Mn=0,310 P=0,018 S=0,007 Cu=0,000
Cr=0,020 Ni=0,020 Al=0,027 Mo=0,000 Ti=0,000
V=0,000 Nb=0,000 W==,000

Werkstoff Low-Carbon

FIG.6

EP 2 753 439 B1

Strangtemperatur

Strang 1800x250 mm
Werkstoff Low_Carbon    Gießgeschwindigkeit 1.00 m/min

FIG.7

EP 2 753 439 B1

Seg 0
Seg 1T
Seg 1B

Seg 2

flüssig

teigig

Seg 3-4

Seg 5-6

Seg 7    Seg 8-10    Seg 11-12

Temperatur [°C]

700 900 1100 1300 1500 1532

flüssig

teigig

Strang 1800x250 mm

Werkstoff Low_Carbon

Gießgeschwindigkeit 1.00 m/min

FIG.8

FIG.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10251716 B3
- DE 102005036068 A1
- DE 102004005919 A1